# EUROPÄISCHE PATENTSCHRIFT

(11) **EP 1 121 228 B1**
(45) Veröffentlichungstag und Bekanntmachung des Hinweises auf die Patenterteilung: **04.12.2002**
(21) Anmeldenummer: 99950713.0
(22) Anmeldetag: 13.10.1999
(51) Int. Cl.: B27K 3/34, B27K 3/50, B27K 3/52

(54) **NICHT-WÄSSRIGES HOLZSCHUTZMITTEL GEGEN TROCKENHOLZSCHÄDLINGE**
NON-AQUEOUS WOOD PRESERVATIVE DIRECTED AGAINST DRY WOOD PESTS
PRODUIT NON AQUEUX POUR PROTEGER LE BOIS SEC CONTRE DES PARASITES

(30) Priorität: 17.10.1998 DE 19847964
(43) Veröffentlichungstag der Anmeldung: 08.08.2001
(73) Patentinhaber: Tex-Color Vermögensverwaltung GmbH & Co. KG, 63875 Obernburg (DE); Hans Knöll Institut für Naturstoff-Forschung e.V., 07745 Jena (DE); Fachhochschule Erfurt, 99085 Erfurt (DE); Maier, Sabine, 99084 Erfurt (DE)
(72) Erfinder: MAIER, Sabine, D-99084 Erfurt (DE); HERTEL, Waltraud, D-07751 Jena (DE); MÜLLER, Peter-Jürgen, D-07745 Jena (DE); FINK, Horst, D-01277 Dresden (DE); BEIL, Detlef, D-07743 Jena (DE)
(74) Vertreter: Leitner, Waldemar, Dr. techn.
(86) Internationale Anmeldenummer: EP9907676
(87) Internationale Veröffentlichungsnummer: WO00023232

(56) Entgegenhaltungen:
- EP-A- 0 604 978
- WO-A-96/38275
- WO-A-96/40831
- FR-A- 2 727 830
- GB-A- 996 585
- GB-A- 2 317 402
- RöMPP CHEMIE LEXIKON: "Seiten 1343-1345", 1990, GEORG THIEME VERLAG STUTTGART, 9.AUFLAGE

## Beschreibung

Die Erfindung betrifft ein nicht-wässriges Holzschutzmittel gegen Trockenholzschädlinge, gemäß den Merkmalen des Oberbegriffs des Anspruchs 1.

Trägersubstanzen enthaltene Holzschutzmittel sind bekannt und dienen dazu, Holz, das als ein nachwachsender und jederzeit verfügbarer Werkstoff in besonderem Maße die Anforderungen einer ökologisch orientierten Wirtschaft erfüllt, gegen insektiziden, bakteriziden oder fungiziden Befall durch holzzerstörende Insekten und/oder Mikroorganismen zu schützen. Die breite Anwendung und Erhaltung des Werkstoffs Holz wird jedoch durch diese Schädlinge stark beeinträchtigt. Besonders in Gebäuden verbautes Holz von alter und/oder neuer Bausubstanz z. B. Fachwerk und Dachkonstruktionen, aber auch kulturhistorische Gegenstände wie Holzskulpturen oder Möbel, erfährt oft aufgrund des Befalls durch Insekten oder Mikroorganismen unter Umständen eine vollständige Vernichtung. Dem entgegenzuwirken befinden sich gegenwärtig ca. 2 000 Holzschutzmittel auf dem Markt, von denen aber lediglich 10% der Produkte durch anerkannte Prüfstellen auf ihre Wirksamkeit sowie Einhaltung der gesundheitlichen und umweltbezogenen Richtlinien geprüft wurden. Nachteilig an den bekannten Holzschutzmitteln ist, daß sie als biozide, also als insektizide, bakterizide oder fungizide Wirkstoffe jedoch weitestgehend synthetisch hergestellte, insbesondere halogenhaltige organische Verbindungen enthalten.

Viele der auf dem Markt befindlichen Holzschutzmittel enthalten für Insekten giftige, vorwiegend synthetische oder natürlich vorkommende Substanzen, die aber auch auf die Umwelt, und damit auf Menschen, Tiere und Pflanzen eine giftige Wirkung oder wenigstens eine Beeinträchtigung des Allgemeinbefindens bewirken können. Bei den bekannten synthetischen Wirkstoffen handelt es sich hierbei vorwiegend um halogenhaltige Verbindungen wie Flufenoxuron, Tebuconazol, Tolyfluanid, Dichlofluanid, Cyfluthrin, Naled und Chlorpyrifos. Außerdem werden z. B. Pyrethroide zusammen mit Carbamaten und Cyfluthrin oder Piperonylbutoxiden und Triazolylbutan/Cyfluthrin in Holzschutzmitteln als biozide Wirkstoffe gegen Insekten vorgeschlagen. Alle dieser vorgenannten Mittel sind in toxikologischer Hinsicht als bedenklich einzustufen. In der Fachliteratur werden auch natürliche Phyrethroide oder diesen nahestehende synthetische Phyrethroide wegen einer möglichen säugertoxischen Wirkung als nicht unbedenklich angesehen. Es befinden sich daher gegenwärtig keine synthetischen oder auf Naturstoffen basierende Substanzen mit biozider Wirkung auf dem Markt, die auf Warmblütler keinen gesundheitsschädlichen bzw. gesundheitsbeeinträchtigenden Einfluß haben.

Neben den vorgenannten synthetischen Mitteln sind auch eine Reihe von Wirksubstanzen auf Naturstoffbasis mit insektizider Wirkung auf dem Markt. Es ist jedoch noch nicht gesichert, daß diese natürlichen Wirksubstanzen auf Warmblütler keinen gesundheitsschädlichen bzw. gesundheitbeeinträchtigenden Einfluß haben.

Ein weiterer Nachteil der bekannten nicht-wässrigen Holzschutzmittel besteht darin, daß sie erhebliche Mengen an organischen Lösemitteln enthalten, um durch eine Viskositätsabsenkung der Wirkstoffkombination des Holzschutzmittels ein besseres Penetrationsvermögen derselben in das Holz zu bewirken. Die organischen Lösungsmittel werden zwar an die Umwelt abgegeben, die Anwendung derartiger bekannter nicht-wässriger Holzschutzmittel in Innenräumen ist aber aufgrund der möglichen Lösungsmittelemission bedenklich. Begründet auf der eventuellen Gesundheitsgefährdung führten Diskussionen und das dadurch verursachte Mißtrauen der Bevölkerung zu einer Verringerung des Absatzes von Holzschutzmitteln.

Desweiteren ist es bekannt, ein nicht-wässriges Holzschutzmittel derart zu formulieren, daß als Trägersubstanz bzw. als Bindemittel für den Wirkstoff natürliche Öle und als biozide Wirkstoffe organische und/oder anorganische Substanzen aus der Natur oder der synthetischen Chemie verwendet werden. Diese bekannten Holzschutzmittel besitzen jedoch den Nachteil, daß dabei deren Eindringtiefe in das Holz durch die Zugabe von nachteiligen Lösemittel verbessert werden muß.

Es ist auch bekannt, die Viskosität von aus natürlichen Ölen hergestellten Trägersubstanzen durch die Anwendung höherer Temperaturen im Bereich von ca. 250 ° C zu erniedrigen, was aber bei einer Vielzahl von zu schützenden Objekten nur eingeschränkt möglich ist. Als Trägersubstanz bzw. Bindemittel für die Wirkstoffe nicht-wässriger Holzschutzmittel werden hierbei vorwiegend natürliche Öle aus nachwachsenden Rohstoffen, wie z. B. Leinöl, Rapsöl, aber auch Mineralöle verwendet.

Die GB-A-996585 beschreibt ein Verfahren zur Behandlung einer Holzoberfläche, welches dazu dient, den Reibungskoeffizient der Holzoberfläche in bezug auf andere Oberflächen zu reduzieren. Es ist vorgesehen, daß die Holzoberfläche mit einem oder mehreren Gleitmitteln imprägniert wird, welche aus der Klasse der Ester, die aus gesättigten und einfach ungesättigten, aliphatischen Fettsäuren, welche 8 bis 20 Kohlenstoffatome und gesättigten oder einfach ungesättigten aliphatischen Alkoholen, welche 1 bis 20 Kohlenstoffatome enthalten, stammt. Da hierbei gewährleistet sein muß, daß das verwendete Gleitmittel bei Zimmertemperatur fest ist (ansonsten würde das Gleitmittel aus den imprägnierten Holzoberflächen austreten und die mit ihm in Kontakt befindliche andere Oberfläche verschmutzen), ist vorgesehen, daß das Auftragen des Gleitmittels in Vakuum in der Größenordnung von 40-60 mg Hg bei Raumtemperatur erfolgt. Dann wird die behandelte Oberfläche einer Wärmebehandlung in Vakuum unterworfen, welche bei einer Temperatur zwischen 70°C und 75°C erfolgt. Danach erfolgen noch weitere Behandlungsschritte, um die Holzfläche mit dem Gleitmittel zu imprägnieren.

Aus der FR-A-2727830 ist ein Holzschutzmittel-Konzentrat bekannt, das einen Wirkstoff enthält, der aus der Gruppe der Pyrethoide, der Imidazole, der organischen Chlorverbindungen oder organischen Phosphorverbindungen oder einer Mischung aus diesen ausgewählt ist. Es wird ein Trägerstoff verwendet, der aus Estern oder Polyestern von Polyolen und damit auch aus Triglyceriden ausgewählt ist. Das bekannte Holzschutzmittel wird in einem wässrigen Milieu appliziert. Es handelt sich hierbei also bei dem bekannten Holzschutzmittel nicht um ein nicht-wässriges Holzschutzmittel. Ein weiterer Nachteil des bekannten Holzschutzmittels ist, daß es als Wirkstoff äußerst bedenkliche Substanzen enthält. Desweiteren ist hierbei in nachteiliger Art und Weise vorgesehen, daß als Trägerstoffe ausschließlich Ester oder Polyester mehrwertiger Alkohole oder Triglyceride verwendet werden.

Es ist daher Aufgabe der vorliegenden Erfindung, ein Holzschutzmittel der eingangs genannten Art zu schaffen, wobei das erfindungsgemäße Holzschutzmittel ein verbessertes Eindringvermögen aufweisen soll.

Diese Aufgabe wird erfindungsgemäß dadurch gelöst, daß die oder eine der Trägersubstanzen ein Ester einwertiger, niederer Alkohole mit Fettsäuren aus mindestens einem natürlichen Öl pflanzlicher Herkunft ist, daß der Anteil dieser Trägersubstanz oder dieser Trägersubstanzen im Holzschutzmittel mindestens 20 Gew.% beträgt, und daß die einwertigen, niederen Alkohole C₁-C₄ sind.

Die erfindungsgemäßen Maßnahmen bewirken, daß in vorteilhafter Art und Weise ein nicht-wässriges Holzschutzmittel mit einer hohen Penetrationswirkung geschaffen wird, indem eine Trägersubstanz verwendet wird, die sich durch eine verbesserte Eindringtiefe in das Holz auszeichnet, und hierdurch dessen Pflege bewirkt und gleichzeitig durch den Einsatz entsprechender Wirksubstanzen die im Holz vorhandenen Insekten oder mikrobielle Holzschädlinge wie Bakterien oder Pilze schädigt bzw. in ihrer Entwicklung nachhaltig beeinträchtigt und den erneuten Befall der Hölzer durch die Schädlinge verhindert.

Eine vorteilhafte Weiterbildung der Erfindung sieht vor, daß die oder eine der Trägersubstanzen ein Rapsölfettsäuremethylester-Gemisch ist. Ein derartiges Ester-Gemisch ist für Menschen und warmblütige Tiere physiologisch völlig unbedenklich und wird bisher großtechnisch als Motorentreibstoff für Dieselmotore verwendet. Es bildet in vorteilhafter Art und Weise einen flüssigen Trägerstoff geringer Viskosität aus, der sich durch einen hohen Flammpunkt von etwa 170° C, einen hohen Brennpunkt von ungefähr 194° C und einen hohen Siedepunkt von ungefähr 340° C auszeichnet und eine Verdunstungszahl von ungefähr 1 200-1 800 aufweist. Dadurch entfällt in vorteilhafter Art und Weise eine Emission dieses Trägerstoffes in die Umwelt. Desweiteren ist die Verweilzeit im Holz sehr hoch und garantiert somit eine Langzeitwirkung in Bezug auf Pflege und in Kombination mit Wirksubstanzen auch eine Langzeitwirkung bei der Bekämpfung der Holzschädlinge.

Eine weitere vorteilhafte Weiterbildung der Erfindung sieht vor, daß das erfindungsgemäße Holzschutzmittel eine oder mehrere in Fettsäurealkylester-Gemisch lösliche oder in einem aliphatischen Lösemittel gelöste spezifische biozide Wirkstoffe aufweist. Eine derartige Maßnahme besitzt den Vorteil, daß einpflegender Effekt und eine holzschützende Wirkung gegen Trockenholzschädlinge erzielbar ist.

Eine weitere vorteilhafte Weiterbildung der Erfindung sieht vor, daß das Holzschutzmittel als Wirkstoff Quassin, insbesondere in der Form eines Quassin-Extraktes, enthält. Die Verwendung von Quassin, vorzugsweise in einer Menge von 0,1 bis 10 Gew.%, als Wirkstoff besitzt den Vorteil, daß Quassin für den Menschen völlig unbedenklich ist, während es für Insekten eine abstoßende (repellente) bzw. stark beeinträchtigende und tötende Wirkung besitzt. Die Kombination eines aus einem Rapsölfettsäuremethylester-Gemisch und einem alkoholischen Quassin-Extrakt gebildeten, nicht-wässrigen Holzschutzmittel führt in vorteilhafter Art und Weise zu einem nichtschichtbildenden, in das Holz im wesentlichen vollständig eindringenden Holzschutzmittel mit pflegender und biozider Wirkung.

Eine weitere vorteilhafte Weiterbildung der Erfindung sieht vor, daß das erfindungsgemäße Holzschutzmittel einen Zusatz von Kupfersalzen von Fettsäuren, vorzugsweise von aus Rapsöl erhältlichen Festsäuren, oder Fettsäuregemischen, vorzugsweise [C₇₋₂₂], enthält. Diese Maßnahme besitzt den Vorteil, daß die vorgenannten Kupfersalze dann mit der Trägersubstanz des erfindungsgemäßen Holzschutzmittels ebenfalls in das Holz eindringen und die Ansiedlung von mikrobiellen und pflanzlichen Schädlingen wie Pilzen, Bakterien und Flechten unterbindet. Dies bedeutet eine Erweiterung des erfindungsgemäßen Holzschutzmittels gegenüber einem lediglich Quassin enthaltenden Mittel, welches hauptsächlich eine spezifisch insektizide Wirkung besitzt.

Eine weitere vorteilhafte Weiterbildung der Erfindung sieht vor, daß das erfindungsgemäße Holzschutzmittel anstelle der Kupfersalze oder im Gemisch mit diesen Zimtsäure enthält. Diese Maßnahme bewirkt eine Erweiterung des erfindungsgemäßen Holzschutzmittels gegenüber einem lediglich Quassin-haltigen Mittel.

Eine weitere vorteilhafte Weiterbildung der Erfindung sieht vor, daß das erfindungsgemäße Holzschutzmittel anstelle von Quassin oder im Gemisch mit diesem einen Zusatz von Zimtaldehyd undloder Zimtsäure, Hauptbestandteil des ätherischen Öles der Rinde von Cinnamomum ceylanicum, aufweist. Die vorgenannten Wirkstoffe zeichnen sich durch ihre fungizide Wirkung aus und dringen mit der Trägersubstanz ebenfalls in das Holz ein und unterbinden die Ansiedlung von mikrobiellen und pflanzlichen Schädlingen wie Pilzen, Bakterien und Flechten. Der Zusatz der vorgenannten Wirkstoffe zum erfindungsgemäßen Holzschutzmittel bedeutet wiederum eine Erweiterung seines Einsatzbereiches gegenüber einem Holzschutzmittel, das nur das spezifisch gegen Insekten wirkende Quassin enthält.

Eine weitere vorteilhafte Weiterbildung der Erfindung sieht vor, daß das erfindungsgemäße Holzschutzmittel einen Zusatz zur Ausbildung eines schichtbildenden, unpigmentierten Überzugs enthält.

Eine vorteilhafte Weiterbildung der Erfindung sieht vor, daß das Holzschutzmittel einen lasierenden Zusatz aufweist. Die erfindungsgemäße Maßnahme besitzt den Vorteil, daß hierdurch ein Trockenholz schützender Effekt mit einer dekorativen Wirkung verbunden wird.

Eine vorteilhafte Weiterbildung der Erfindung sieht vor, daß das erfindungsgemäße Holzschutzmittel einen ein Wirkstoffdepot bildenden Zusatz aufweist.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1: eine schematische Darstellung der Auftrennung eines alkoholischen Extraktes von Quassin mit HPLC,
- Figur 2: ein Mortalitätsdiagramm, und

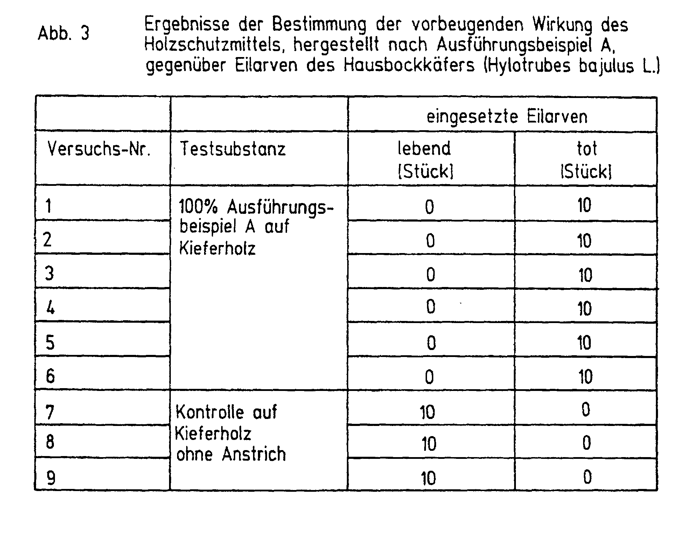

- Figur 3: eine Mortalitätstabelle.

### 1. Holzschutzmittel A

Ein nichtschichtbildendes Holzschutzmittel mit insektizider Wirkung wird dadurch hergestellt, indem zu einem Rapsölfettsäuremethylester-Gemisch in einer Menge von 70-90 Gew.% als Trägersubstanz ein n-Butanol-Auszug von Quassin in einer Menge von 10-30 Gew.% als biozider Wirkstoff zugesetzt wird.

Die Herstellung eines Rapsölfettsäuremethylester-Gemisches ist bekannt und muß daher nicht mehr näher beschrieben werden. Der n-Butanol-Auszug des Quassins wird vorzugsweise dadurch erhalten, daß 5-10 g feines Holzmehl des Quassia amara L.-Baumes mit 100 ml kaltem n-Butanol übergossen werden, wobei der Holzstaub mit einer bevorzugten Teilchengröße ≤ 0,05 mm im n-Butanol nicht schwimmt, sondern sedimentiert. Unter täglichem kurzen Bewegen im geschlossenen Gefäß löst sich innerhalb von ca. 8 Tagen der größte Teil der Inhaltsstoffe des Holzmehls im n-Butanol.

Die Aufschlämmung wird nun zentrifugiert oder filtriert und als n-Butanol-Auszug dem Rapsölfettsäuremethylester-Gemisch zugesetzt.

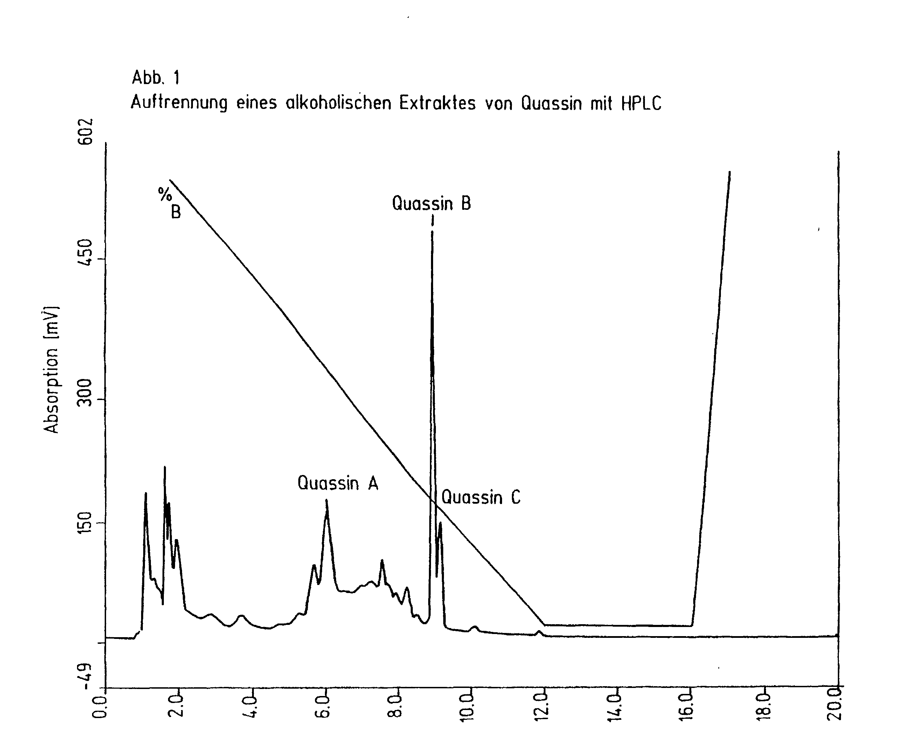

Die quantitative Bestimmung des Quassingehalts, welches die Komponenten Quassin A, Quassin B und Quassin C enthält, im alkoholischen Extrakt wird anhand der Figur 1 beschrieben. Diese zeigt den zeitlichen Ablauf der mittels Hochleistungsflüssigkeitschromographie (HPLC) durchgeführten Bestimmung. Demzufolge ist über der Abszisse die Zeit und über der Ordinate die Absorbtion aufgetragen. Zur qualitativen Bestimmung des verwendeten Quassins wird die gelöste Quassin-Probe in einer Säule mit einem Revers-Phase-Trägermaterial, z. B. Spherisorb 50DS2, als stationäre Phase getrennt und zurückgehalten, wobei die Auftragsmenge der Probe 20 ml beträgt. Als mobile Phase, die das Ablösen der durch das HPLC-Verfahren nachzuweisenden Substanzen bewirkt, wird ein Gemisch aus Acetonnitril mit 0,05% Trifluoressigsäure (TFA) und bidestilliertem Wasser mit 0,05% Trifluoressigsäure (TFA) mit einem pH-Wert von ca. 5, insbesondere 5,0, eingesetzt. Hierbei wird - wie durch die in Figur 1 durchgezogene Linie %B dargestellt ist - im Verlauf der Zeit die Konzentration von Acetonnitril der mobilen Phase kontinuierlich von 90% auf 20% verringert und die aus der Säule austretende Flüssigkeit in einem UV-Detektor bei einer Wellenlänge von 280 nm gemessen.

Man erkennt aus Figur 1 die Mengenverhältnisse von Quassin A, Quassin B und Quassin C, wobei hier anzumerken ist, daß dieses Spektogramm nur exemplarischen Charakter besitzt und die Allgemeinheit der hier dargelegten Überlegungen nicht einschränken soll, da Quassin als ein natürlicher Stoff regional oder sonstig bedingte Unterschiede in seinem Anteil von Quassin A, Quassin B und Quassin C aufweist.

Es ist aber auch möglich, daß anstelle des Rapsölfettsäuremethylester-Gemisches, das sich besonders als Trägersubstanz eignet, auch ein anderes Fettsäurealkylester-Gemisch, insbesondere ein [C₁₀₋₂₀]-Fettsäurealkylester-Gemisch verwendet wird.

Das beschriebene Holzschutzmittel weist somit eine hohe Eindringtiefe in das Holz auf und bewirkt dadurch seine Pflege. Die Verwendung des insektiziden Wirkstoffs Quassin bewirkt, daß das beschriebene Holzschutzmittel neben der Pflege des Holzes eine Schädigung der im Holz vorhandenen Insekten bewirkt und wirksam einen erneuten Befall der Hölzer durch Schädlinge, insbesondere Insekten und hierbei insbesondere Coleoptera, entgegenwirkt.

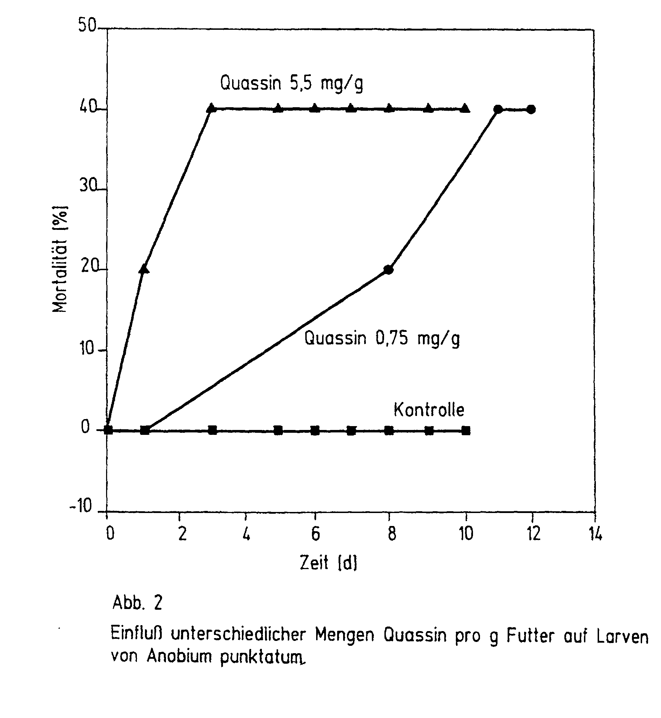

Die insektizide Wirkung von Quassin wurde anhand von Larven des Trockenholzschädlings Anobium punctatum (Pochkäfer) ermittelt. In Figur 2 ist nun auf der Abszisse der zeitliche Verlauf und auf der Ordinate die Mortalitätsrate dargestellt, wobei die Zeiteinheit der Abszisse Tage und die Maßeinheit der Ordinate Prozent ist. Man erkennt, daß bei einem Zusatz von 5,3 mg pro Gramm Futter für die vorgenannten Schädlinge eine Mortalitätsrate von 20% nach einem Tag auftritt, die sich auf 40% nach ungefähr drei Tagen erhöht und dann in diesem Niveau verbleibt. Werden 0,75 mg 1 g Futter zugesetzt, so hebt sich eine Mortalitätsrate von 20% nach ungefähr acht Tagen, wobei dann die Mortalitätsrate ungefähr nach elf Tagen auf 40% ansteigt und auf diesem Niveau verbleibt. Ein Vergleich mit einer Kontrollgruppe, bei der kein Quassin dem Holz zugesetzt wurde, zeigt eine Mortalitätsrate von 0% in diesem Zeitraum.

Die insektizide Wirkung des Holzschutzmittels wurde desweiteren dadurch getestet, indem das Holzschutzmittel A auf Prüfhölzer aus Kiefernholz mit einer Eindringmenge von ca. 250 ml/m² aufgebracht und danach vier Wochen trokken gelagert wurde. Dann wurden Eilarven des Hausbockkäfers (Hylotrupes bajulus L.) eingesetzt und nach weiteren vier Wochen das Ergebnis Mortalitätsrate und somit die Wirksamkeit des beschriebenen Holzschutzmittels A.

Zusammenfassend zu dem Holzschutzmittel A ist auszuführen, daß durch die vorstehend beschriebenen Maßnahmen ein nicht-schichtbildendes Holzschutzmittel ausgebildet wird, welches sich aufgrund der Verwendung der beschriebenen Trägersubstanz durch sein besonders günstiges Eindringvermögen in altes oder neues Holz auszeichnet und im Holz vorhandene Schädlinge durch den beschriebenen, auf Quassin basierenden Wirkstoff nachhaltig beeinträchtigt und abtötet und/oder von einem erneuten Befall der Hölzer abschreckt. Die Kombination der vorstehend beschriebenen, einen Fettsäuremethylester, insbesondere Rapsölfettsäuremethylester, aufweisenden Trägersubstanz mit einem alkoholischen Quassin-Extrakt führt daher in vorteilhafter Art und Weise zu einem nicht-schichtbildenden, in das Holz im wesentlichen vollständig eindringenden Holzschutzmittel mit pflegender und biozider, insbesondere insektizider Wirkung.

Um nun das Holzschutzmittel nicht nur mit einer insektiziden Wirkung auszustatten, sondern auch eine gegen mikrobielle Schädlinge (Bakterien und Pilze) bekämpfenden Wirkung auszustatten, kann vorzugsweise vorgesehen sein, daß zur oben beschriebenen Formulierung ein Zusatz von Kupfersalzen der aus Rapsöl erhältlichen Fettsäuren, einer anderen Fettsäure oder einem Fettsäure-Gemisch, vorzugsweise [C₇₋₂₂] in einer Menge von 3-5 Gew.% beigegeben werden.

Als weiterer Zusatzwirkstoff oder als Quassin-Ersatz kann Zimtaldehyd als insektizider Wirkstoff und/oder Zimtsäure als fungizider Wirkstoff zugegeben werden. Diese Wirkstoffe dringen mit der Trägersubstanz ebenfalls in das Holz ein und unterbinden in vorteilhafter Art und Weise die Ansiedlung von mikrobiellen und pflanzlichen Schädlingen. Dies bedeutet in vorteilhafter Art und Weise eine Ergänzung des Mitteleinsatzes gegenüber der spezifisch insektiziden Wirkung des Quassins.

### 2. Holzschutzmittel B

Um nun aus dem nicht-schichtbildenden Holzschutzmittel gemäß dem vorstehend beschriebenen ersten Ausführungsbeispiels ein schichtbildendes, lasierendes Holzschutzmittel zu erhalten, wird dem mit "Holzschutzmittel A" bezeichneten Holzschutzmittel gemäß dem vorstehend beschriebenen Ausführungsbeispiel lufttrocknendes Alkydharz in Testbenzin auf der Basis von natürlichen Ölen, z. B. Sojaöl, zur Ausbildung der Schicht des Holzschutzmittels, sowie mindestens ein lasierender Zusatz, wie z. B. lasierende Eisenoxidpigmente und vorzugsweise ein Mischsikkativ, wie z. B. Cobalt-, Zirkon- oder Bariumsalz hinzugefügt.

Hierbei wird bevorzugt, daß das "Holzschutzmittel A" in einem Anteil von 50-70 Gew.%, das lufttrocknende Alkydharz in einer Menge von 20-40 Gew.%, die lasierenden Eisenoxidpigmente in einem Anteil von ungefähr 5 Gew.% und das Mischsikkativ in einem Anteil von ungefähr 1-5 Gew.% vorhanden sind.

Hierbei ist noch anzuführen, daß anstelle des Alkydharzes es auch möglich ist, stark trocknende, natürliche Öle, wie z. B. vorbehandeltes Leinöl oder Hanföl zu verwenden.

### 3. Holzschutzmittel C

Um nun aus dem "Holzschutzmittel A" oder den "Holzschutzmittel B" gemäß dem in Abschnitt 1 oder 2 erläuterten Ausführungsbeispielen ein schichtbildendes, deckend pigmentiertes Holzschutzmittel zu erhalten, ist vorgesehen, daß diesen Holzschutzmitteln wiederum lufttrocknendes Alkydharz oder stark trocknende, natürliche Öle wie vorbehandeltes Leinöl oder Hanföl in Testbenzin sowie ein Mischsikkativ zugeführt werden. Anstelle der lasierenden Zusätze werden nun deckend pigmentierende Zusätze wie Titandioxid, Zinkoxid, Eisenoxid, Talkum, Glimmer und/oder Kalzide, also umweltverträgliche Pigmente oder Füllstoffe, zugeführt.

Hierbei wird bevorzugt, daß in dem hier beschriebenen "Holzschutzmittel C" etwa 20-30 Gew.% des Holzschutzmittels A, 15-25 Gew.% lufttrocknendes Alkydharz in Testbenzin, ungefähr 1,5-2,0 Gew.% Mischsikkativ, 10-20 Gew.% Titandioxid, 30-35 Gew.% Zinkoxid und 5-10 Gew.% Testbenzin enthalten sind, wobei jedoch der Gesamtanteil der Trägersubstanz des Holzschutzmittels C mindestens 20 Gew.% beträgt.

Durch die vorstehend beschriebene Vorgangsweise wird ein Holzschutzmittel mit einem umfassenden Trockenholz schützenden Effekt sowie einer dekorativen Wirkung erzielt.

### 4. Holzschutzmittel D

Um nun das im wesentlichen ein Holzschutzmittel mit insektizider Wirkung darstellende Holzschutzmittel A, B, C in ihrer zusätzlichen Schutzwirkung gegen mikrobielle Schädlinge wie Pilze und Bakterien auszustatten, ist vorgesehen, daß den Holzschutzmitteln gemäß den ersten drei Ausführungsbeispielen Kupfersalze des Rapsölfettsäuregemisches hinzugefügt werden, wobei der Anteil dieser Kupfersalze ungefähr 3-5 Gew.% beträgt.

Es ist desweiteren möglich, daß den vorstehend beschriebenen Holzschutzmitteln 2-5 Gew.% Zimtsäure zugesetzt werden.

Desweiteren ist es möglich, einen Zusatz von etwa 20% bis 30% Holzmehl, hergestellt aus dem Holz von Quassia amara L., zum Alkydharz eine weitere schichtaufbauende Komponente als gleichzeitiges natürliches, quassinhaltiges Wirkstoffdepot beizumischen. Das im bioziden Wirkstoff Quassin enthaltene Holzmehl kann aufgrund seiner körnigen Substanz nicht in das Holz eindringen, sondern reichert sich an der Oberfläche in der Alkydharzschicht an und wirkt somit als Barriere für einen möglichen Befall durch Trockenholzinsekten.

Der Gehalt der Trägersubstanz an Quassin liegt hierbei im Bereich von 50-150mg pro ml Trägermaterial. Die Behandlung von Trockenholz mit Rapsölfettsäuremethylester-Gemisch/Quassin inklusive andere Zusätze verhindert den Befall mit tierischen und/oder mikrobiellen Holzschädlingen.

## Patentansprüche

1. Nicht-wässriges Holzschutzmittel gegen Trockenholzschädlinge, enthaltend mindestens einen Wirkstoff mit gegen Trockenholzschädlinge abweisender oder biozider Wirkung und mindestens eine diesen Wirkstoff tragende Trägersubstanz, **dadurch gekennzeichnet, daß** die oder eine der Trägersubstanzen ein Ester einwertiger, niederer Alkohole mit Fettsäuren aus mindestens einem natürlichen Öl pflanzlicher Herkunft ist, daß der Anteil dieser Trägersubstanz oder dieser Trägersubstanzen im Holzschutzmittel mindestens 20 Gew.% beträgt, und daß die einwertigen, niederen Alkohole C₁-C₄ sind.

2. Holzschutzmittel nach einem der vorangehenden Ansprüche, **dadurch gekennzeichnet, daß** der vorgenannte Ester ein Fettsäuremethylester oder ein derartiges Gemisch, insbesondere ein Rapsölffettsäuremethylester oder ein Rapsölfettsäuremethylester-Gemisch ist.

3. Holzschutzmittel nach einem der vorangehenden Ansprüche, **dadurch gekennzeichnet, daß** der Anteiz der Trägersubstanz im Holzschutzmittel im wesentlichen 95 Gew.% des Esters einwertiger, niederer C₁₋₄-Alkohole mit Fettsäuren aus mindestens einem natürlichen Öl pflanzlicher Herkunft beträgt.

4. Holzschutzmittel nach einem der vorangehenden Ansprüche, **dadurch gekennzeichnet, daß** der Wirkstoff ein Wirkstoff mit gegen Trockenholzschädlinge abweisender oder insektizider, fungizider oder bakterizider Wirkung ist.

5. Holzschutzmittel nach einem der vorangehenden Ansprüche, **dadurch gekennzeichnet, daß** mindestens einer der Wirkstoffe Quassin und/oder Zimtaldehyd enthält.

6. Holzschutzmittel nach einem der vorangehenden Ansprüche, **dadurch gekennzeichnet, daß** mindestens einer der Wirkstoffe ein Kupfersalz einer natürlichen Fettsäure oder eines Fettsäure-Gemisches pflanzlicher Herkunft ist und/oder Zimtsäure enthält.

7. Holzschutzmittel nach einem der vorangehenden Ansprüche, **dadurch gekennzeichnet, daß** mindestens einer der Wirkstoffe Zimtaldehyd und/oder Zimtsäure ist.

8. Holzschutzmittel nach einem der vorangehenden Ansprüche, **dadurch gekennzeichnet, daß** der oder die Wirkstoffe in einem aliphatischen Lösemittel gelöst sind.

9. Holzschutzmittel nach einem der vorangehenden Ansprüche, **dadurch gekennzeichnet, daß** es ein lufttrocknendes Alkydharz auf der Basis von natürlichen Ölen oder trocknende, natürliche Öle, insbesondere vorbehandeltes Leinöl oder Hanföl, aufweist.

10. Holzschutzmittel nach einem der vorangehenden Ansprüche, **dadurch gekennzeichnet, daß** es mindestens einen lasierenden Zusatz, insbesondere mindestens ein lasierendes Eisenoxidpigment, enthält.

11. Holzschutzmittel nach einem der vorangehenden Ansprüche, **dadurch gekennzeichnet, daß** es mindestens einen deckend pigmentierenden Zusatz enthält.

12. Holzschutzmittel nach einem der vorangehenden Ansprüche, **dadurch gekennzeichnet, daß** der deckend pigmentierende Zusatz Titandioxid, Zinkoxid, Eisenoxid, Talkum, Glimmer oder ein Kalzid ist.

13. Holzschutzmittel nach einem der vorangehenden Ansprüche, **dadurch gekennzeichnet, daß** es mindestens ein Alkydharz oder ein trocknendes Öl, mindestens ein Pigment oder mindestens ein Sikkativ enthält.

14. Holzschutzmittel nach einem der vorangehenden Ansprüche, **dadurch gekennzeichnet, daß** es einen ein Wirkstoffdepot aufbauenden Schichtbildner enthält.

15. Holzschutzmittel nach einem der vorangehenden Ansprüche, **dadurch gekennzeichnet, daß** der das Wirkstoffdepot aufbauende Schichtbildner ein Pulver ist.

16. Holzschutzmittel nach einem der vorangehenden Ansprüche, **dadurch gekennzeichnet, daß** der Schichtbildner aus dem Holz von Quassia amara L. hergestellt ist.

## Claims

1. A non-aqueous wood preservative effective against dry wood pests, said preservative containing at least one active ingredient with repellent or biocidal effect against dry wood pests and at least one carrier substance carrying this active ingredient, **characterized in that** the or one of the carrier substance(s) is an ester of monohydric low alcohols with fatty acids of at least one natural oil of vegetable origin and the amount of this carrier substance is at least 20 % by weight, and that the monohydric, low alcohols are C₁-C₄.

2. The wood preservative according to claim 1, **characterized in that** the aforementioned ester is a fatty acid methyl ester or a mixture of that kind, in particular a rape seed oil fatty acid methyl ester or a rape seed oil fatty acid methyl ester mixture.

3. The wood preservative according to one of the previous claims, **characterized in that** the amount of the carrier substance in the wood preservative is substantially 95-100 % by weight of the ester of monohydric low alcohols with fatty acids of at least one natural oil of vegetable origin.

4. The wood preservative according to one of the previous claims, **characterized in that** the active ingredient is an active ingredient with repellent or insecticidal, fungicidal or bactericidal effect against dry wood pests.

5. The wood preservative according to one of the previous claims, **characterized in that** at least one of the active ingredients contains quassin and/or cinnamic aldehyde.

6. The wood preservative according to one of the previous claims, **characterized in that** at least one of the active ingredients is a copper salt of a natural fatty acid or of a fatty acid mixture of vegetable origin and/or contains cinnamic acid.

7. The wood preservative according to one of the previous claims, **characterized in that** at least one of the active ingredients is cinnamic aldehyde and/or cinnamic acid.

8. The wood preservative according to one of the previous claims, **characterized in that** the active ingredient or the active ingredients is/are dissolved in an aliphatic solvent.

9. The wood preservative according to one of the previous claims, **characterized in that** it contains an air-drying alkyd resin based on natural oils or desiccative natural oils, in particular pre-treated linseed oil or hemp oil.

10. The wood preservative according to one of the previous claims, **characterized in that** it contains at least one glazing additive, in particular at least one glazing iron oxide pigment.

11. The wood preservative according to one of the previous claims, **characterized in that** it contains at least one pigmenting coating additive.

12. The wood preservative according to one of the previous claims, **characterized in that** the pigmenting coating additive is titanium dioxide, zinc oxide, iron oxide, talcum, mica or a calcite.

13. The wood preservative according to one of the previous claims, **characterized in that** it contains at least an alkyd resin or a desiccative oil, at least one pigment or at least one siccative.

14. The wood preservative according to one of the previous claims, **characterized in that** it contains a film-builder forming a depot of active ingredients.

15. The wood preservative according to one of the previous claims, **characterized in that** the film-builder forming the depot of active ingredients is a powder.

16. The wood preservative according to one of the previous claims, **characterized in that** the film-builder is produced from the wood of Quassia amara L.

## Revendications

1. Agent non aqueux de protection du bois dirigé contre des parasites s'attaquant au bois sec, contenant au moins une substance active possédant une activité biocide contre les parasites s'attaquant au bois sec ou une activité éloignant lesdits parasites, et au moins une substance de support pour supporter cette substance active, **caractérisé en ce que** la substance de support ou une de ces dernières représente un ester d'alcools inférieurs monovalents avec des acides gras constitués par au moins une huile naturelle d'origine végétale, **en ce que** la fraction de cette substance de support ou de ces substances de support dans l'agent de protection du bois représente au moins 20 % en poids et **en ce que** les alcools inférieurs monovalents sont des alcools contenant de 1 à 4 atomes de carbone.

2. Agent de protection du bois selon l'une quelconque des revendications précédentes, **caractérisé en ce que** l'ester susmentionné représente un ester méthylique d'acides gras ou un mélange desdits esters, en particulier un ester méthylique d'acides gras d'huile de colza ou un mélange d'esters méthyliques d'acides gras d'huile de colza.

3. Agent de protection du bois selon l'une quelconque des revendications précédentes, **caractérisé en ce que** la fraction de la substance de support dans l'agent de protection du bois représente essentiellement 95 % en poids de l'ester d'alcools inférieurs monovalents contenant de 1 à 4 atomes de carbone avec des acides gras constitués par au moins une huile naturelle d'origine végétale.

4. Agent de protection du bois selon l'une quelconque des revendications précédentes, **caractérisé en ce que** la substance active est une substance active possédant une activité éloignant les parasites s'attaquant au bois sec ou encore une activité insecticide, fongicide ou bactéricide.

5. Agent de protection du bois selon l'une quelconque des revendications précédentes, **caractérisé en ce qu'**au moins une des substances actives contient de la quassine et/ou de l'aldéhyde cinnamique.

6. Agent de protection du bois selon l'une quelconque des revendications précédentes, **caractérisé en ce qu'**au moins une des substances actives représente un sel de cuivre d'un acide gras naturel ou d'un mélange d'acides gras d'origine végétale et/ou contient de l'acide cinnamique.

7. Agent de protection du bois selon l'une quelconque des revendications précédentes, **caractérisé en ce qu'**au moins une des substances actives représente de l'aldéhyde cinnamique et/ou de l'acide cinnamique.

8. Agent de protection du bois selon l'une quelconque des revendications précédentes, **caractérisé en ce que** la substance active ou les substances actives sont dissoutes dans un solvant aliphatique.

9. Agent de protection du bois selon l'une quelconque des revendications précédentes, **caractérisé en ce qu'**il présente une résine alkyde séchant à l'air à base d'huiles naturelles ou d'huiles naturelles siccatives, en particulier d'huile de lin ou d'huile de chanvre soumise à un traitement préalable.

10. Agent de protection du bois selon l'une quelconque des revendications précédentes, **caractérisé en ce qu'**il contient au moins un additif ayant un effet de glaçage, en particulier au moins un pigment d'oxyde de fer ayant un effet de glaçage.

11. Agent de protection du bois selon l'une quelconque des revendications précédentes, **caractérisé en ce qu'**il contient au moins un additif de pigmentation ayant un effet de recouvrement.

12. Agent de protection du bois selon l'une quelconque des revendications précédentes, **caractérisé en ce que** l'additif de pigmentation ayant un effet de recouvrement est du dioxyde de titane, de l'oxyde de zinc, de l'oxyde de fer, du talc, du mica ou du calcide.

13. Agent de protection du bois selon l'une quelconque des revendications précédentes, **caractérisé en ce qu'**il contient au moins une résine alkyde ou une huile siccative, au moins un pigment ou au moins un siccatif.

14. Agent de protection du bois selon l'une quelconque des revendications précédentes, **caractérisé en ce qu'**il contient un agent de stratification permettant d'accumuler un dépôt de substance active.

15. Agent de protection du bois selon l'une quelconque des revendications précédentes, **caractérisé en ce que** l'agent de stratification permettant d'accumuler un dépôt de substance active est une poudre.

16. Agent de protection du bois selon l'une quelconque des revendications précédentes, **caractérisé en ce que** l'agent de stratification est fabriqué à partir du bois de Quassia amara L.
